Europäisches Patentamt

**European Patent Office**

Office européen des brevets

(11) Publication number: **0 076 002**
**A2**

## (12) EUROPEAN PATENT APPLICATION

(21) Application number: **82201185.4**

(22) Date of filing: **23.09.82**

(51) Int. Cl.³: **B 27 B 17/12**

(30) Priority: **23.09.81 IT 4688481**

(43) Date of publication of application:
**06.04.83 Bulletin 83/14**

(84) Designated Contracting States:
**AT BE CH DE FR GB IT LI LU NL SE**

(71) Applicant: **OLEO-MAC Società per Azioni**
**2, Via A. Secchi**
**I-42011 Bagnolo in Piano Reggio Emilia(IT)**

(72) Inventor: **Bartoli, Ariello**
**6, Via 20 Settembre**
**I-42011 Bagnolo in Piano Reggio Emilia(IT)**

(74) Representative: **Corradini, Corrado**
**4, Via Sessi**
**I-42100 Reggio Emilia(IT)**

(54) Lubrication electro-mechanic control device, intended for the chain of chain saws.

(57) Electromechanical device for the control of the operation of the chain lubrication system of portable chain saws, which includes a chamber (1a) to be located in any point of the lubricant line; a piston (8), free to slide in the chamber (1a), under constant elastical load towards the lubricant inlet (222) and with longitudinal passages (9) for same lubricant; as well as an electric circuit (11) suitable to be disconnected by the piston (8) when at rest; in same electric circuit, there is an external indicator (12).

FIG.1

EP 0 076 002 A2

- 1 -

## Lubrication electro-mechanical control device, intended for the chain of chain saws

For cutting wood, portable chain saws are generally known, consisting of a motor driving a cutting chain, wounded over a suitable guide bar.

Furthermore, such chain saws present a lubrication system to lubricate the cutting chain, in order to prevent overheating and thus insuring proper operation.

Said lubrication system includes an oil tank, a filter, a pump driven by the chain saw motor, and a series of ducts connecting said parts.

As mentioned above, the correct operation of the aforementioned portable chain saws can only be obtained provided a sufficient lubrication of the cutting chain is insured. Therefore, to insure a correct chain lubrication, there has to be sufficient oil in the tank, the filter must not be clogged, the pump must work properly and/or present no leakages, and there must be no obstructions and/or leakages along the respective connecting ducts. Evidently, due to these conditions, it is extremely difficult to establish whether or not the chain lubrication is correct, since this is left to the operator's experience or requests long, numerous and complicated inspections of said system.

It is opportune to stress out that a delayed noticing of the overheating of the cutting chain can lead to unrepairable breakages of same, as well as of the relevant guide bar and other connected parts.

The present invention provides a control and warning device suitable to be installed in any point of the lubrication circuit of the chain of portable chain saws; this device is able to constantly check the operation of said lubrication system in order to give warning signs about an eventual insufficient lubrication of the cutting chain.

According to the invention, the control device comprises a chamber, crossed by the lubricating oil directed to the cutting chain; in this chamber, there is a sliding piston provided with longitudinal passages for the oil and elastically preloaded towards the oil inlet. The piston's movements inside said chamber are used to activate or not, depending on the lubricating oil flow being short or sufficient, an external warning device which can be a warning light or a sound indicator.

To complete the invention, an electrical circulation is provided, fed by the electric system of the chain saw itself or by an external electric net along which there are two poles, normally disconnected during a sufficient or regular lubrication, as well as the afore-said external warning device which is fed electrically when the connection of the two said poles takes place, i.e. in case of an insufficient lubrication.

The disconnection of the contact between said two poles is done, directly or indirectly, by the piston.

The invention will be better understood thanks to the following detailed specification, which is made with reference to the enclosed drawings, showing merely for exemplifying and not limiting reasons, a preferred embodiment thereof.

FIG. 1 is a longitudinal section of the invention.

FIG. 2 is the section taken over the line II-II of FIG. 1.

In the above figures, a cylindrical body (1), made of a suitable insulating material, is provided with a cylindrical through bore (1a).

The afore-said insulating material could be a synthetic material and the external shape of the body (1) does not need to be cylindrical.

Furthermore, the through-bore (1a) could also have a different shape from the presented cylindrical one.

The two opposed throats of said through-cavity (1a) present respectively threaded portions (2) and (3) where two plugs or threaded diaphragms (22) and (33) are screwed.

Each of them is provided with a central threaded through-hole for a suitable connection of the invention to a normal system or lubrication circuit of the cutting chain of a portable chain saw.

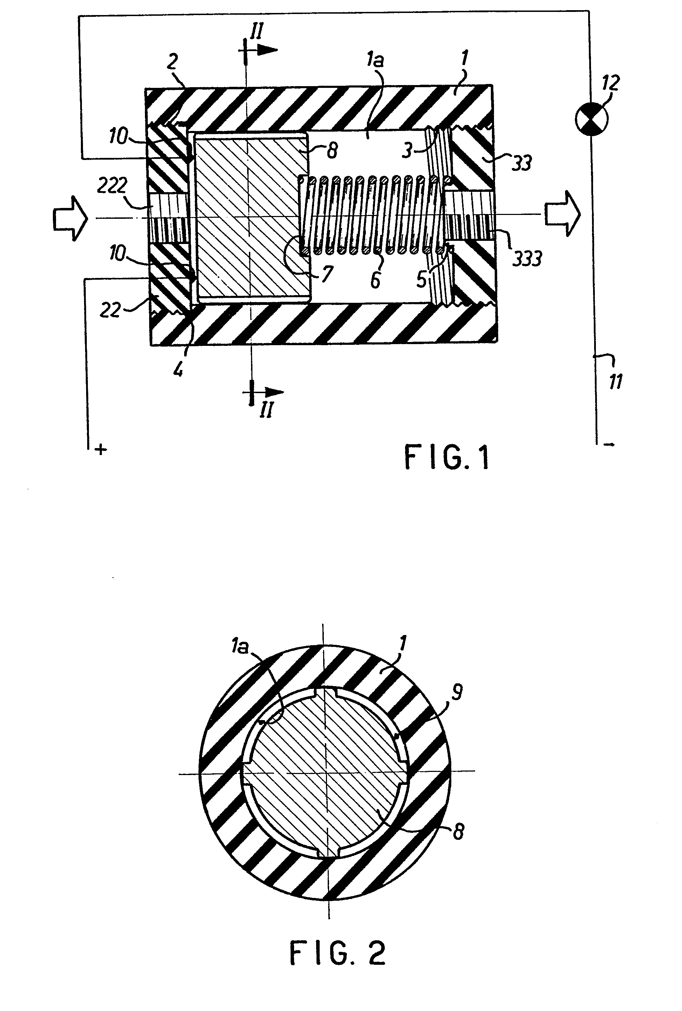

As it is clearly shown on FIG. 1, the through-hole (222) represents the inlet of the lubricating oil into the body (1), while the through-hole (333) defines the outlet of same lubricating oil.

The control device in question can be installed in any point of said lubrication system, for instance between the lubrication oil tank and the filter, between the latter and the pump, or between the pump and the oil discharge towards the cutting chain.

The threaded diaphragms (22) and (33) are made of a suitable insulating material, as for instance synthetic material. The upper diaphragm (22) is tightly fixed to the body (1) with a gasket (4), while the under diaphragm (33) can be adjusted according to the longitudinal extension of said body (1).

The inner face of the diaphragm (33) is provided with circular rim (5), concentric to the through-hole (333); this rim receives, and locates, the end of a small compression spring (6), which is coaxially inserted into the body (1) cavity (1a).

The opposite end of said spring (6) is located in a circular seat of a piston (8) which slides into the body (1).

The piston (8) divides said cavity (1a) into two opposed chambers which are constantly communicating through a series of longitudinal grooves (9), which are reciprocally spaced (FIG. 2) on the external surface of the piston.

This piston is made of a conductive material.

Alternatively, longitudinal through-bores can be made inside the body (1).

Furthermore, the passage of the lubricating oil inside the device can substantially be provided by an annular interspace between the external surface of the piston and the corresponding internal surface of the body (1).
This further embodiment is particularly favourable as it prevents the clogging of the device in question due to dirt and/or foreign parts in the lubricating oil.

On the inner face of the upper diaphragm (22), there are two poles (10) belonging to an electric circuit (11).
Along same circuit, there is a warning device (12) intended to be installed on the external side of the casing of a portable chain saw equipped with the invention.
The external warning device (12) may consist of a warning light or of a sound indicator, while the circuit (11) can be fed by the electric system of the chaim saw itself or by an external electric source.

During the operation of a portable chain saw equipped with the invention, there is an oil flow in the lubrication system of the cutting chain, which also passes through the body (1).
The passage of said oil through the body (1) causes a downward movement of the piston (8) - small or large, depending on the preloading given to the spring (6); in this way, the piston moves away from the poles (10) opening the circuit (11) and disconnecting the external warning device (12).

Obviously, said movement can be adjusted, by the preloading adjustment of the spring, to the requested lubrication oil delivery which crosses the device or to the requested speed of the portable chain saw's motor.

Consequently, the above-mentioned disconnection will only occur when, according to the adjustment specified above, a sufficient or regular oil circulation through the device in question is obtained.

If, on the contrary, the crossing oil flow is lower than the desired value, either because there is no oil in the tank or because the filter is clogged or because the pump is damaged or has blow-bys, or also because the connecting ducts are clogged or leaking, then the piston does not move away from the poles (10) and, therefore, the electric circuit (11) remains connected and the external indicator starts working.

The invention also allows to effect the calibration through the diaphragm (22) in combination or not with the other diaphragm (33), making the first like the second one.

Furthermore, according to the invention, the connection of the contact between the 2 poles (10), besides being effected directly by the piston (8), can also be done by the same piston in an indirect way.

This is obtained, for instance, in case of a piston made of insulating material, providing a conductive resilient blade in correspondence with one of the two poles (10), able to contact the other pole when thrusted by the piston moving upwards. Furthermore, using a piston of conductive material, it is possible to place one pole on the upper diaphragm (22) and the other pole on the under diaphragm (33), connected to the piston via the spring (6).

In addition, both in case the poles are provided on one diapnragm only or in case of poles on both diaphragms, it is possible to make there diaphragms of conductive material, with of course, suitable electric insulation between the diaphragms and the poles, and between the diaphragms and the connections of said poles to the electric circuit (11).

Finally, although up to now it has only been referred to portable chain saws, it is obvious that the control device in question is also suitable to equip any kind of machine, group, system, device, equipment or instrument provided with a forced lubrication system operating contextually with a main or secondary motor.

It is understood that the invention is not limited to the embodiments described above and that modifications and improvements can be made without passing the sphere of the invention, so as defined in the following claims.

Claims

1. Lubrication electro-mechanical control device, intended for the chain of chain saws, characterized by a piston (8), sliding inside a chamber (1a) installed in any point of the lubricant line, between said chamber and piston being provided longitudinal passages (9) for the lubricant flow which crosses the chamber (1a), the piston (8) being constantly preloaded towards the inlet (222) of said flow, and moving downwards under the action of the crossing flow, when the flow rate is over a desired value, so opening a contact (10) located inside the chamber (1a) and belonging to an electric circuit (11) feeding an external warning indicator (12).

2. Device according to claim 1, characterized by said longitudinal passages (9) consisting of a series of longitudinal grooves, suitably spaced, on the external surface of the piston (8).

3. Device according to claim 1, characterized by said longitudinal passages (9) being in form of grooves provided on the inner side wall of said chamber (1a).

4. Device according to claim 1, characterized by said longitudinal passages (9) being a toroidal interspace between the piston (8) and its chamber (1a).

5. Device according to claims 1, characterized by a compression spring (6) with adjustable preloading, thrusting the piston to close the contact (10).

6. Device according to claim 1, characterized by the side wall and end walls defining said chamber (1a) being made
of an insulating material while the piston (8) is made of
a conductive material.

7. Device according to claim 1, characterized by the fact
that said contact includes two poles (10), both provided
on the upper end (22) of said chamber (1a).

8. Device according to claim 1, characterized by the fact
that said contact includes two poles (10), one of which
is provided on the upper end (22) of said chamber (1a)
while the other is represented by the piston (8) itself.

9. Device according to claim 1, characterized by the fact
that said contact includes two poles (10) situated on
the upper end (22) of said chamber (1a); from one of these
poles deriving a resilient blade able to contact the other
pole when thrusted by the piston (8).

10. Device according to claim 1, characterized by the fact
that said piston (8) is made of insulating material.

11. Device according to claim 1, characterized by the fact
that the end walls (22, 23) of said chamber (1a) are made
of a conductive material, against which said poles (10)
and the relevant connections to the electric circuit (11)
are electrically insulated.

12. Device according to claim 1, characterized by the fact
that said electric circuit (11) is fed by the electric
system of the corresponding portable chain saw.

13. Device according to claim 1, characterized by the fact that said electric circuit (11) is fed by an external electric network.

14. Device according to claim 1, characterized by the fact that said external warning device (12) is a warning light mounted on the casing of the portable chain saw.

15. Device according to claim 1, characterized by the fact that said external warning device (12) is a sound generator.

16. Forced lubrication system including, in whichever point of its lubricant flow lines, an electromechanical control device as specified in the preceding claims.

FIG. 1

FIG. 2